(19) Europäisches Patentamt
European Patent Office
Office européen des brevets

(11) EP 4 656 751 A1

(12) EUROPEAN PATENT APPLICATION
published in accordance with Art. 153(4) EPC

(43) Date of publication:
03.12.2025 Bulletin 2025/49

(51) International Patent Classification (IPC):
C22C 12/00 (2006.01)       C22C 13/02 (2006.01)
B23K 35/26 (2006.01)       B23K 35/363 (2006.01)

(21) Application number: 23918333.8

(22) Date of filing: 24.01.2023

(52) Cooperative Patent Classification (CPC):
B23K 35/0244; B23K 35/025; B23K 35/26;
B23K 35/262; B23K 35/264; B23K 35/3601;
B23K 35/3613; C22C 12/00; C22C 13/02

(86) International application number:
PCT/JP2023/002160

(87) International publication number:
WO 2024/157366 (02.08.2024 Gazette 2024/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Tamura Corporation
Tokyo 178-8511 (JP)

(72) Inventors:
• SHIMAZAKI, Takanori
Iruma-shi Saitama 358-0032 (JP)
• ASANO, Tomoki
Iruma-shi Saitama 358-0032 (JP)
• ARAI, Masaya
Iruma-shi Saitama 358-0032 (JP)

(74) Representative: Cabinet Beau de Loménie
103, rue de Grenelle
75340 Paris Cedex 07 (FR)

(54) **SOLDER ALLOY, JOINT PART, JOINING MATERIAL, SOLDER PASTE, JOINT STRUCTURE, AND ELECTRONIC CONTROL DEVICE**

(57) A solder alloy capable of forming a joint portion while comprising Bi, has heat cycle resistance and drop impact resistance, and suppresses occurrence of liftoff, the solder alloy comprising: 35 mass% or more and 65 mass% or less of Bi; 0.1 mass% or more and 0.65 mass% or less of Sb; 0.05 mass% or more and 2 mass% or less of Ag; and a balance consisting of Sn and inevitable impurities.

FIG.1

EP 4 656 751 A1

**Description**

Technical Field

The present invention relates to a solder alloy, a joint portion, a joining material, a solder paste, a joined structure, and an electronic control device.

Background Art

The joining conditions, for example, the heating temperature and the heating time, of the joining target materials etc. (for example, a printed wiring board and an electronic component) are set depending on the application of the electronic device, the material and heat resistance and the like of the components constituting the electronic device, and generally, a solder alloy that melts below a set heating temperature is used as the material for joining.

As a method of lowering the melting temperature (in the present specification, the expression "melting temperature" means "melting point" or "liquidus temperature".) of the solder alloy, a method of adding Bi to the solder alloy is provided. However, Bi is hard and brittle, and thus ductility of the solder alloy is reduced.

Therefore, for example, the following solder alloys are provided as Bi-comprising solder alloys with improved ductility.

A solder alloy comprising, by mass%, an alloy composition consisting of 35 to 68% of Bi, 0.1 to 2.0% of Sb, 0.01 to 0.10% of Ni, and the balance consisting of Sn. (Patent Literature 1).

A lead-free solder alloy comprising 32 mass% or more and 40 mass% or less of Bi, 0.1 mass% or more and 1.0 mass% or less of Sb, 0.1 mass% or more and 1.0 mass% or less of Cu, 0.001 mass% or more and 0.1 mass% or less of Ni, and the balance consisting of Sn and inevitable impurities (Patent Literature 2).

A SnBiSb-based low-temperature lead-free solder, wherein a lead-free solder consists of 32.8 to 56.5% of Bi, 0.7 to 2.2% of Sb, and the balance being Sn, , the mass 100 fractions of Bi and Sb satisfy the relational expression $b = 0.006a2 - 0.672a + 19.61 + c$, a representing a mass 100 fraction of Bi, b representing a mass fraction of Sb, and a value range of c is $-1.85 \leq c \leq 1.85$, comprising one or two or more metal elements of 0.01 to 2.5% of Ce, 0.05 to 2.0% of Ti, 0.5 to 0.8% of Ag, and 0.05 to 1% of In in a mass 100 fraction (Patent Literature 3).

Prior art documents

Patent Literature

Patent Literature 1: Japanese Patent No. 6477965
Patent Literature 2: Japanese Patent No. 6804126
Patent Literature 3: Japanese Patent No. 6951438

Summary of Invention

Technical Problem

Depending on the type of electronic device, a joined structure (in the present specification, it refers to a structure in which a plurality of joining target materials is joined via a joint portion) in the electronic device may be placed in an environment where a heat cycle is repeated. This heat cycle causes thermal fatigue breaking (crack) of the joint portion. As described above, Bi reduces the ductility of the solder alloy, and thus the crack is likely to occur in the joint portion formed of the Bi-comprising solder alloy.

In addition, when the electronic device receives a strong impact due to drop or the like, an instantaneous and intensive strong external force acts on the joining target material and the joint portion. In order to prevent breakage of the joint portion due to the external force, it is necessary to improve the strength and ductility of the solder alloy in a well-balanced manner. However, as described above, Bi reduces the ductility of the solder alloy, and thus breakage is likely to occur by the action of the external force in the joint portion formed of the Bi-comprising solder alloy.

When an electronic component having a terminal is used as the joining target material, a method (through-hole mounting method) in which a through-hole is provided in a printed wiring board, a terminal of the electronic component is inserted into the through-hole, and both are joined is used, and the terminal of the electronic component in the through-hole and the land (electrode) of the printed wiring board are joined via a joint portion (fillet) formed on the printed wiring board.

In this joining method, since the molten solder is cured from the through-hole side toward the printed wiring board side during cooling, the residual stress tends to concentrate on the land side of the formed joint portion. The printed wiring board also thermally shrinks in the longitudinal direction. Therefore, in this case, a phenomenon (liftoff) in which the joint portion is peeled off from the land tends to occur easily. This liftoff is particularly likely to occur during joining using a solder alloy comprising Bi.

Patent Literatures 1 to 3 neither disclose nor suggest a solder alloy that has resistance to the crack (Hereinafter, in the present specification, it is referred to as "heat cycle resistance".) and resistance to the external force (Hereinafter, in the present specification, it is referred to as "drop impact resistance".) and suppresses the occurrence of liftoff.

An object of the present invention is to solve the above problems, and is to provide a solder alloy, a joining material, and a solder paste capable of forming a joint portion that has heat cycle resistance and drop impact resistance and suppresses occurrence of liftoff while comprising Bi.

Solution to Problem

(1) The solder alloy of the present invention comprises 35 mass% or more and 65 mass% or less of Bi; 0.1 mass% or more and 0.65 mass% or less of Sb; 0.05 mass% or more and 2 mass% or less of Ag, and the balance consisting of Sn and inevitable impurities.
(2) The solder alloy of the present invention preferably further comprises one or more selected from the group consisting of P, Ga, and Ge in a total amount of 0.001 mass% or more and 0.05 mass% or less.
(3) The solder alloy of the present invention preferably further comprises one or more selected from the group consisting of Mn, Ti, Al, Cr, V, Fe, Mg, Pd, Pb, and Mo in a total amount of 0.001 mass% or more and 0.05 mass% or less.
(4) The joining material of the present invention comprises the solder alloy according to any one of (1) to (3).
(5) The solder paste of the present invention comprises a powder made of the solder alloy according to any one of (1) to (3), and a flux comprising a base resin, a thixotropic agent, an activator, and a solvent.
(6) The joint portion of the present invention is formed of the solder alloy according to any one of (1) to (3).
(7) The joint portion of the present invention is formed of the joining material according to (4).
(8) The joint portion of the present invention is formed of the solder paste according to (5).
(9) A joined structure of the present invention comprises: a first joining target material; a joint portion; and a second joining target material,

wherein the joint portion is the joint portion according to any one of (6) to (8), and
the first joining target material and the second joining target material are joined via the joint portion.

(10) An electronic control device of the present invention comprises the joined structure according to (9).

Advantageous Effects of Invention

The solder alloy, the joining material, and the solder paste of the present invention can form a joint portion that, while comprising Bi, has heat cycle resistance and drop impact resistance, and can suppress the occurrence of liftoff.

BRIEF DESCRIPTION OF THE DRAWINGS

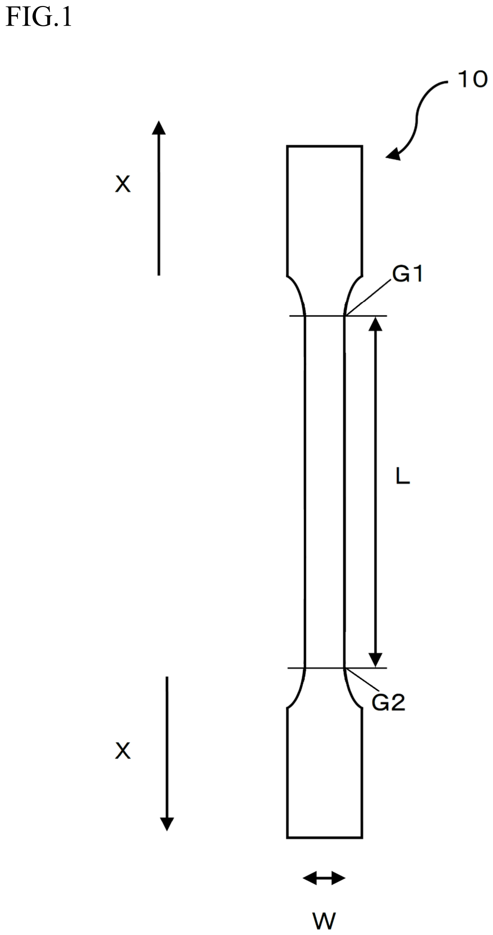

Fig. 1 (1) is a plan view showing a shape of a test piece used in a tensile test.

DESCRIPTION OF THE EMBODIMENTS

Hereinafter, embodiments of the present invention are described. Note that the present invention is not limited to the following embodiments.

1. Solder alloy

The solder alloy of the present embodiment comprises 35 mass% or more and 65 mass% or less of Bi; 0.1 mass% or more and 0.65 mass% or less of Sb; 0.05 mass% or more and 2 mass% or less of Ag, and a balance consisting of Sn and inevitable impurities.

The solder alloy of the present embodiment comprises Bi, Sb, Ag, and Sn in predetermined amounts, so that the strength and ductility of the solder alloy can be improved in a well-balanced manner while comprising Bi.

As a result, the solder alloy of the present embodiment can suppress plastic deformation and slip deformation of the crack tip part and suppress the development of the crack even when the crack due to repetition of the heat cycle occurs in the joint portion and stress concentrates on the crack.

As a result, the solder alloy of the present embodiment can suppress breakage of the joint portion due to an action of an instantaneous and intensive strong external force (hereinafter, simply referred to as "external force") on the joint portion associated with drop of the electronic device or the like.

As described above, in order to suppress the development of cracks occurred in the joint portion, it is important that the joint portion is hardly plastically deformed or slidably deformed. On the other hand, in the joint portion which is hardly plastically deformed, an absorption amount of impact energy generated by the action of the external force is small, and the impact energy which cannot be absorbed damages the joint portion. The external force acts on the joint portion from a plurality of directions (at least two types among tension, compression, shear, bending, and torsion).

Therefore, in order to prevent breakage of the joint portion caused by impact energy/stress associated with the external force, it is required to improve the balance between the strength and ductility of the solder alloy, that is, to improve the yield stress, the tensile stress, and the breaking strain of the joint portion in a well-balanced manner. As described above, since the solder alloy of the present embodiment can form a joint portion having good strength and ductility in a well-balanced manner by the above configuration, it is possible to provide a joint portion having good resistance to the external force, that is, good drop impact resistance.

As a result, the solder alloy of the present embodiment can easily relax the residual stress generated in the joint portion at the time of solder solidification, and can suppress the occurrence of cracks in the joint portion caused by the residual stress and the occurrence of the liftoff described above.

(1) Bi

The solder alloy of the present embodiment comprises 35 mass% or more and 65 mass% or less of Bi. This makes it possible to suppress a decrease in ductility of the solder alloy while lowering the melting temperature of the solder alloy, and by solid-solution strengthening the joint portion by solid solution of Bi in Sn, to improve the strength and ductility of the joint portion in a well-balanced manner.

On the other hand, when the content of Bi is out of the above range, the strength and ductility of the solder alloy may decrease.

The content of Bi is preferably 35 mass% or more and 60 mass% or less. The Bi content is more preferably 40 mass% or more and 59 mass% or less. A preferable content of Bi may be 50 mass% or more, or 54 mass% or more, and may be 58 mass% or less, 56.5 mass% or less, or 56 mass% or less. When the content of Bi is in this range, ductility and strength of the joint portion can be further improved.

(2) Sb

The solder alloy of the present embodiment comprises 0.1 mass% or more and 0.65 mass or less of Sb. This makes it possible to solid-solution strengthen the joint portion by the solid solution of Sb in Sn, to improve the strength and ductility of the joint portion by precipitation and dispersion of a fine $\beta$-SnSb intermetallic compound, and to improve the strength and ductility of the joint portion in a well-balanced manner.

On the other hand, when the content of Sb is less than 0.1 mass%, there is a possibility that the reinforcement of the joint portion becomes insufficient. **In** addition, when the content of Sb is more than 0.65 mass%, a coarse $\beta$-SnSb intermetallic compound is crystallized as a primary crystal, so that there is a possibility that ductility of the joint portion is inhibited.

A preferable content of Sb is 0.2 mass% or more and 0.65 mass% or less. The Sb content is more preferably 0.3 mass% or more and 0.65 mass% or less. By setting the content of Sb within this range, ductility and strength of the joint portion can be further improved.

(3) Ag

The solder alloy of the present embodiment comprises 0.05 mass% or more and 2 mass% or less of Ag. As a result, it is possible to improve the strength and ductility of the joint portion by precipitation and dispersion of a fine $Ag_3Sn$ intermetallic compound while lowering the melting temperature of the solder alloy, and it is possible to improve the strength and ductility of the joint portion in a well-balanced manner.

On the other hand, when the content of Ag is less than 0.05 mass%, precipitation strengthening of the joint portion may be insufficient. **In** addition, when the content of Ag is more than 2 mass%, the $Ag_3Sn$ intermetallic compound is coarsened, so that ductility of the joint portion may be inhibited.

A preferred content of Ag is 0.1 mass% or more and 1.5 mass% or less. The preferred content of Ag can be 1 mass% or less, 0.8 mass% or less, or 0.5 mass% or less. Further, the content of Ag is more preferably 0.2 mass% or more and 0.4 mass% or less. By setting the content of Ag within this range, ductility and strength of the joint portion can be further improved.

The solder alloy of the present embodiment can further comprise one or more selected from the group consisting of P, Ga, and Ge in a total amount of 0.001 mass% or more and 0.05 mass% or less. By adding one or more selected from the group consisting of P, Ga, and Ge to the solder alloy, oxidation of the solder alloy can be suppressed, and wettability of the solder alloy can be improved, so that a highly reliable joint portion can be provided.

On the other hand, when the total content of one or more selected from the group consisting of P, Ga, and Ge exceeds 0.05 mass%, voids are generated in the joint portion, and the heat cycle resistance of the joint portion may be deteriorated.

The solder alloy of the present embodiment can further comprise one or more selected from the group consisting of Mn, Ti, Al, Cr, V, Fe, Mg, Pd, Pb, and Mo in a total amount of 0.001 mass% or more and 0.05 mass% or less.

By adding one or more selected from the group consisting of Mn, Ti, Al, Cr, V, Fe, Mg, Pd, Pb, and Mo to the solder alloy, the intermetallic compound in the joint portion is further refined, so that development of a crack can be suppressed, and good heat cycle resistance can be achieved. On the other hand, when the total content of one or more selected from Mn, Ti, Al, Cr, V, Fe, Mg, Pd, Pb, and Mo exceeds 0.05 mass%, voids are generated in the joint portion, and heat cycle resistance may be deteriorated.

**In** addition, in the case of adding Fe to the solder alloy of the present embodiment, when the content of Fe exceeds 0.05 mass%, there is a possibility that a needle-shaped substance is likely to be generated in the solder alloy in the manufacturing process of the solder alloy. Here, when the solder alloy comprising a needle-shaped substance is spherically powdered, the presence of the needle-shaped substance inhibits the spherically powdering, and thus there is a possibility that the spherically powdering becomes difficult.

The balance of the solder alloy of the present embodiment consists of Sn and inevitable impurities. That is, the solder alloy of the present embodiment may comprise alloy elements other than the above-described alloy elements as inevitable impurities.

2. joining material

The joining material of the present embodiment comprises the solder alloy of the present embodiment, and can be used in the form of a solder paste, a solder ball, a wire, a solder preform, a resin-comprising solder, or the like described later. The form of the joining material can be appropriately selected according to the size, type, and application of the joining target material, the solder joining method, and the like.

Since the joining material of the present embodiment comprises the solder alloy of the present embodiment, it is possible to form a joint portion having heat cycle resistance and drop impact resistance and suppressing the occurrence of liftoff while lowering the melting temperature by the addition of Bi.

3. Solder paste

The solder paste of the present embodiment comprises a powder made of the solder alloy of the present embodiment (Hereinafter, referred to as an "alloy powder".), and is prepared, for example, by kneading the alloy powder and a flux to form a paste.

<Flux>

The flux can comprise, for example, a base resin, a thixotropic agent, an activator, and a solvent.

Examples of the base resin comprises a rosin resin; an acrylic resin obtained by polymerizing at least one monomer of acrylic acid, methacrylic acid, esters of acrylic acid, esters of methacrylic acid, crotonic acid, itaconic acid, maleic acid, maleic anhydride, esters of maleic acid, esters of maleic anhydride, acrylonitrile, methacrylonitrile, acrylamide, methacrylamide, vinyl chloride, vinyl acetate, and the like; an epoxy resin; a phenol resin and the like. These can be used alone or in combination of two or more.

Examples of the thixotropic agent comprise hydrogenated castor oil, hydrogenated castor oil, bisamide-based thixotropic agents (saturated fatty acid bisamide, unsaturated fatty acid bisamide, aromatic bisamide, and the like), oxyfatty acids, and dimethyldibenzylidene sorbitol. These can be used alone or in combination of two or more.

Examples of the activator comprise an organic acid (a monocarboxylic acid, a dicarboxylic acid, and other organic acids), a halogen-comprising compound, and an amine-based activator. These can be used alone or in combination of two or more.

Examples of the solvent comprise alcohol solvents, butyl cellosolve solvents, glycol ether solvents, and ester solvents. These can be used alone or in combination of two or more.

The flux may comprise an antioxidant. Examples of the antioxidant comprise a hindered phenol-based antioxidant, a phenol-based antioxidant, a bisphenol-based antioxidant, and a polymer-type antioxidant.

Additives such as a matting agent and an antifoaming agent may be further added to the flux.

When the solder paste of the present embodiment is prepared, the ratio (mass%) of the alloy powder to the flux can be 65 : 35 to 95 : 5 in terms of alloy powder : flux ratio. For example, the compounding ratio may be 85 : 15 to 93 : 7 or 87 : 13 to 92 : 8.

The particle size of the alloy powder may be 1 $\mu$m or more and 40 $\mu$m or less. The particle size may be 5 $\mu$m or more and 35 $\mu$m or less, or 10 $\mu$m or more and 30 $\mu$m or less. The particle size of the alloy powder can be appropriately changed.

Since the solder paste of the present embodiment comprises the alloy powder, it is possible to form a joint portion having heat cycle resistance and drop impact resistance and suppressing the occurrence of liftoff while lowering the melting temperature by the addition of Bi.

### 4. joint portion

The joint portion of the present embodiment is formed using the solder alloy and the joining material (hereinafter, a solder paste is comprised unless otherwise specified.) of the present embodiment, and joins two joining target materials together.

The method for forming the joint portion of the present embodiment may be any method as long as the joint part can be formed using the solder alloy and the joining material of the present embodiment, and any method such as a reflow method and a flow method can be adopted. In addition, the form of the joining material to be used can also be appropriately selected according to the size, type, and application of the joining target material to be joined, the method of forming the joint portion, and the like.

### 5. Joined structure

A joined structure according to the present embodiment comprises a first joining target material, a joint portion, and a second joining target material. The joint portion is a joint portion of the present embodiment, and the first joining target material and the second joining target material are joined via the joint portion.

Combinations of the first joining target material and the second joining target material can be, for example, two or more selected from a substrate (one whose surface consists of any of a ceramic, a metal, an alloy, and a resin, and on which no electronic circuit is formed), a printed wiring board (a substrate on which an electronic circuit is formed, on which an electronic component or the like is not mounted), a printed circuit board (a printed wiring board on which an electronic component or the like is mounted), an electronic component, a silicon wafer, a semiconductor package, a semiconductor chip, or the like. Different types of joining target materials may be combined, or the same type of joining target materials may be combined.

Specific examples of the combination comprise a printed wiring board and an electronic component, a printed wiring board and a semiconductor chip, a semiconductor package and a printed circuit board, a printed wiring board and a printed wiring board, and the like.

In addition, the joined structure of the present embodiment is produced, for example, by the following method.

When a printed wiring board is used as the first joining target material and an electronic component is used as the second joining target material, first, the joining material of the present embodiment is placed (applied in the case of solder paste) at a predetermined position of the first joining target material, for example, on an electronic circuit, and the second joining target material is placed on the joining material. Then, these are reflowed at a predetermined heating temperature, for example, a peak temperature of 200°C to form a joint portion for joining the first joining target material and the second joining target material. Thus, the joined structure (printed circuit board) of the present embodiment is manufactured.

When a solder preform is used as the joining material, the solder preform having a surface applied with flux is placed at a predetermined position of the first joining target material, the second joining target material is placed on the solder preform, and heating is performed.

When an electronic component comprising solder balls, such as Ball Grid Array (BGA), is used as the second joining target material, a solder paste is applied to a surface of the BGA or a predetermined position of the first joining target material, and the second joining target material is placed on the predetermined position of the first joining target material, and heating is performed.

The joined structure of the present embodiment has the joint portion of the present embodiment. As a result, the joined structure of the present embodiment has heat cycle resistance and drop impact resistance, is less likely to occur liftoff, and can maintain high reliability.

6. Electronic control device

The electronic control device of the present embodiment comprises the joined structure of the present embodiment, and for example, a printed circuit board in which an electronic component and a printed wiring board are joined is disposed in a housing, and controls an operation of a component constituting an electronic device.

The electronic control device of the present embodiment comprises the joined structure of the present embodiment. As a result, the electronic control device of the present embodiment has heat cycle resistance and drop impact resistance, is less likely to occur liftoff, and can maintain high reliability.

Examples

Hereinafter, the present invention is described in detail with reference to Examples and Comparative Examples. Note that the present invention is not limited to these Examples.

[Table 1]

|  | mass% | | | | |
|---|---|---|---|---|---|
|  | Sn | Bi | Sb | Ag | Others |
| Example 1 | Balance | 35.0 | 0.4 | 0.4 | - |
| Example 2 | Balance | 40.0 | 0.4 | 0.4 | - |
| Example 3 | Balance | 50.0 | 0.4 | 0.4 | - |
| Example 4 | Balance | 54.0 | 0.4 | 0.4 | - |
| Example 5 | Balance | 56.0 | 0.4 | 0.4 | - |
| Example 6 | Balance | 58.0 | 0.4 | 0.4 | - |
| Example 7 | Balance | 59.0 | 0.4 | 0.4 | - |
| Example 8 | Balance | 60.0 | 0.4 | 0.4 | - |
| Example 9 | Balance | 65.0 | 0.4 | 0.4 | - |
| Example 10 | Balance | 54.0 | 0.1 | 0.4 | - |
| Example 11 | Balance | 54.0 | 0.2 | 0.4 | - |
| Example 12 | Balance | 54.0 | 0.3 | 0.4 | - |
| Example 13 | Balance | 54.0 | 0.65 | 0.4 | - |
| Example 14 | Balance | 54.0 | 0.4 | 0.05 | - |
| Example 15 | Balance | 54.0 | 0.4 | 0.1 | - |
| Example 16 | Balance | 54.0 | 0.4 | 0.2 | - |
| Example 17 | Balance | 54.0 | 0.4 | 0.4 | - |
| Example 18 | Balance | 54.0 | 0.4 | 0.5 | - |
| Example 19 | Balance | 54.0 | 0.4 | 0.8 | - |
| Example 20 | Balance | 54.0 | 0.4 | 1.0 | - |
| Example 21 | Balance | 54.0 | 0.4 | 1.5 | - |
| Example 22 | Balance | 54.0 | 0.4 | 2.0 | - |
| Example 23 | Balance | 35.0 | 0.1 | 0.05 | - |
| Example 24 | Balance | 65.0 | 0.65 | 2.0 | - |

[Table 2]

| | mass% | | | | |
|---|---|---|---|---|---|
| | Sn | Bi | Sb | Ag | Others |
| Example 25 | Balance | 54.0 | 0.4 | 0.4 | 0.05 P |
| Example 26 | Balance | 54.0 | 0.4 | 0.4 | 0.05 Ga |
| Example 27 | Balance | 54.0 | 0.4 | 0.4 | 0.05 Ge |
| Example 28 | Balance | 54.0 | 0.4 | 0.4 | 0.05 Mn |
| Example 29 | Balance | 54.0 | 0.4 | 0.4 | 0.05 Ti |
| Example 30 | Balance | 54.0 | 0.4 | 0.4 | 0.05 Al |
| Example 31 | Balance | 54.0 | 0.4 | 0.4 | 0.05 Cr |
| Example 32 | Balance | 54.0 | 0.4 | 0.4 | 0.05 V |
| Example 33 | Balance | 54.0 | 0.4 | 0.4 | 0.05 Fe |
| Example 34 | Balance | 54.0 | 0.4 | 0.4 | 0.05 Mg |
| Example 35 | Balance | 54.0 | 0.4 | 0.4 | 0.05 Pd |
| Example 36 | Balance | 54.0 | 0.4 | 0.4 | 0.05 Pb |
| Example 37 | Balance | 54.0 | 0.4 | 0.4 | 0.05 Mo |

[Table 3]

| | mass% | | | | |
|---|---|---|---|---|---|
| | Sn | Bi | Sb | Ag | Others |
| Comparative Example 1 | Balance | 58.0 | - | - | - |
| Comparative Example 2 | Balance | 30.0 | 0.4 | 0.4 | - |
| Comparative Example 3 | Balance | 34.0 | 0.4 | 0.4 | - |
| Comparative Example 4 | Balance | 70.0 | 0.4 | 0.4 | - |
| Comparative Example 5 | Balance | 54.0 | - | 0.4 | - |
| Comparative Example 6 | Balance | 54.0 | 0.05 | 0.4 | - |
| Comparative Example 7 | Balance | 54.0 | 0.7 | 0.4 | - |
| Comparative Example 8 | Balance | 54.0 | 0.4 | - | - |
| Comparative Example 9 | Balance | 54.0 | 0.4 | 2.5 | - |
| Comparative Example 10 | Balance | 54.0 | 0.4 | 0.4 | 0.1 P |
| Comparative Example 11 | Balance | 54.0 | 0.4 | 0.4 | 0.1 Ga |
| Comparative Example 12 | Balance | 54.0 | 0.4 | 0.4 | 0.1 Ge |
| Comparative Example 13 | Balance | 54.0 | 0.4 | 0.4 | 0.1 Mn |
| Comparative Example 14 | Balance | 54.0 | 0.4 | 0.4 | 0.1 Ti |
| Comparative Example 15 | Balance | 54.0 | 0.4 | 0.4 | 0.1 Al |
| Comparative Example 16 | Balance | 54.0 | 0.4 | 0.4 | 0.1 Cr |
| Comparative Example 17 | Balance | 54.0 | 0.4 | 0.4 | 0.1 V |
| Comparative Example 18 | Balance | 54.0 | 0.4 | 0.4 | 0.1 Fe |
| Comparative Example 19 | Balance | 54.0 | 0.4 | 0.4 | 0.1 Mg |
| Comparative Example 20 | Balance | 54.0 | 0.4 | 0.4 | 0.1 Pd |
| Comparative Example 21 | Balance | 54.0 | 0.4 | 0.4 | 0.1 Pb |

(continued)

| | mass% | | | | |
|---|---|---|---|---|---|
| | Sn | Bi | Sb | Ag | Others |
| Comparative Example 22 | Balance | 54.0 | 0.4 | 0.4 | 0.1 Mo |

(1) Tensile test

For each of the solder alloys shown in Tables 1 to 3, a test piece 10 as shown in Fig. 1 was prepared.
The test piece 10 was prepared so that the central parallel part (between G1 and G2 in Fig. 1) was as follows.

- Length of central parallel part (L in Fig. 1): 12 mm
- Width of central parallel part (W in Fig. 1): 2 mm
- Thickness of central parallel part: 4 mm

Then, a tensile test was carried out on the test piece 10 according to the following procedure.
The test piece 10 was pulled in the X direction at room temperature with a stroke of 0.72 mm/min until it was broken using a tabletop precision universal testing machine (product name: Autograph AG-50kNX plus, manufactured by Shimadzu Corporation).
Then, the stroke distance when the test piece 10 was broken was defined as GL1, the length L of the central parallel part of the test piece before pulling was defined as GL0, and the degree of elongation of the test piece 10 was calculated based on the following equation.

$$\text{Degree of elongation (\%)} = (GL1 - GL0)/GL0 \times 100$$

Five test pieces 10 were prepared for each type of solder alloy, and the degree of elongation and the average values of the degree of elongation were calculated for each according to the above procedure, and evaluation was made based on the following criteria. The results are shown in Tables 4 to 6.

- ⊙: The average value of degree of elongation is 35% or more.
- O: The average value of degree of elongation is 30% or more and less than 35%.
- △: The average value of degree of elongation is 25% or more and less than 30%.
- ×: The average value of the degree of elongation is less than 25%.

(2) Drop Impact Test

A flux obtained by kneading the following components and a solder alloy powder (powder particle size: 20 μm to 38 μm) shown in Tables 1 to 3 were kneaded at the following ratio (mass%) to prepare each solder paste. The solder alloy powder was prepared by an atomization method.

Solder alloy powder: flux = 89 : 11

<Composition of flux>

- Hydrogenated acid-modified rosin (product name: KE-604, manufactured by Arakawa Chemical Industries, Ltd.): 49 mass%
- Activator (Glutaric acid: 0.3 mass%, suberic acid: 2 mass%, malonic acid: 0.5 mass%, dodecanedioic acid: 2 mass%, dibromobutenediol: 2 mass%)
- Fatty acid amide (product name: Slipax ZHH, manufactured by Nippon Kasei Chemical Co., Ltd.): 6 mass%
- Diethylene glycol monohexyl ether: 35.2 mass%
- Hindered phenol antioxidant (product name: Irganox 245, manufactured by BASF Japan Ltd.): 3 mass%

In addition, the following tools were prepared.

- LGA (Land Grid Array, pitch width: 0.5 mm, size: length 12 mm × width 12 mm × thickness 1 mm, number of terminals:

228 pins)

- Glass epoxy substrate (substrate: FR-4, surface treatment: Cu-OSP, thickness: 1.0 mm, having a pattern on which the LGA can be mounted)
- Metal mask (thickness: 100 μm, corresponding to the above pattern)

For each solder paste, 5 of the glass epoxy substrates and 20 LGAs were used.

Then, each test substrate was prepared by the following procedure using the tool and each solder paste, and a drop impact test was performed.

First, a solder paste was printed on a glass epoxy substrate using a metal mask. Then, four LGAs were placed at predetermined positions on the printed solder paste per glass epoxy substrate. The printing film thickness of the solder paste was adjusted with a metal mask.

Then, the glass epoxy substrate on which the LGA was placed was reflowed using a reflow furnace (product name: TNV-M6110CR, manufactured by TAMURA CORPORATION) to prepare a test substrate having the LGA, the glass epoxy substrate, and a joint portion for joining them.

In the reflow, the preheating was performed at 100°C to 120°C, the peak temperature was 200°C, the time at 150°C or higher was 60 seconds, and the cooling rate from the peak temperature to 100°C was 1°C to 4°C/sec. The oxygen concentration was set to 200 ± 100 ppm.

Next, the prepared test substrate was subjected to a drop impact test under the following conditions using a drop impact tester (product name: HDST-150J, SHINYEI Technology Co., LTD.).

That is, in accordance with JEDEC standard JESD22-B111, the test substrate was repeatedly freely dropped from a height at which a shock wave shape with an acceleration of 1,500 G and a width of 0.5 ms was loaded. During the drop impact test, the electric resistance of each joint portion of the test substrate was constantly observed, and when the resistance value exceeded 1,000 Ω, it was interpreted that the test substrate was broken, and the number of drops until the test substrate was broken was measured.

Five test substrates were prepared for each type of solder paste, the measurement results were Weibull plotted for a total of 20 LGAs, the number of drops at a cumulative failure rate of 63.2% was estimated as the characteristic life, and evaluation was performed according to the following criteria. The results are shown in Tables 4 to 6.

⊙: The characteristic life is 110 times or more.
○: The characteristic life is 90 times or more and less than 110 times.
△: The characteristic life is 70 times or more and less than 90 times.
✕: The characteristic life is less than 70 times.

(3) Heat cycle test

The following tools were prepared.

- Chip component (3.2 mm × 1.6 mm)
- Glass epoxy substrate (Substrate: FR-4, surface treatment: Cu-OSP, thickness: 1.2 mm, having a pattern on which the chip component can be mounted)
- Metal mask (Thickness: 120 μm, corresponding to the above pattern)

For each solder paste, 3 of the glass epoxy substrates and 30 chip components were used.

Then, each test substrate was prepared by the following procedure using the tool and each solder paste, and a heat cycle test was performed.

First, a solder paste was printed on a glass epoxy substrate using a metal mask. Then, 10 chip components were placed at predetermined positions on the printed solder paste per glass epoxy substrate. The printing film thickness of the solder paste was adjusted with a metal mask.

Then, the glass epoxy substrate on which the chip component was placed was reflowed using a reflow furnace (product name: TNV-M6110CR, manufactured by TAMURA CORPORATION) to prepare three mounting substrates having the chip component, the glass epoxy substrate, and a joint portion for joining them.

In the reflow, the preheating was performed at 100°C to 120°C, the peak temperature was 200°C, the time at 150°C or higher was 60 seconds, and the cooling rate from the peak temperature to 100°C was 1°C to 4°C/sec. The oxygen concentration was set to 200 ± 100 ppm.

Next, using a thermal shock testing apparatus (product name: ES-76LMS, manufactured by Hitachi Appliances, Inc.), each of the mounting substrates was exposed to a thermal shock cycle as follows under a set condition wherein 1 cycle is from -40°C (30 minutes) to 125°C (30 minutes), to prepare test substrates a to c.

a: Test substrate exposed to an environment in which the above thermal shock cycle is repeated 2,000 cycles
b: Test substrate exposed to an environment in which the above thermal shock cycle is repeated 2,250 cycles
c: Test substrate exposed to an environment in which the above thermal shock cycle is repeated 2,500 cycles

A target part of c was cut out from each test substrate a, and sealed with an epoxy resin (product name: HERZOG EPO low viscosity resin (main agent and curing agent), manufactured by HERZOG JAPAN CO., LTD.).

Then, the central cross section of each chip component mounted on each test substrate was made visible using a wet polishing machine (product name: TegraPol-25, manufactured by Marumoto Struers Co., Ltd.), the state of each joint portion on each of the test substrates a to c was observed using a scanning electron microscope (product name: TM-1000, manufactured by Hitachi High-Technologies Corporation), the presence or absence of cracks completely crossing the joint portion was checked, and evaluation was performed according to the following criteria. The results are shown in Tables 4 to 6.

⊙: No crack completely crossing the joint portion was generated in any of the test substrates a to c.

O: No crack completely crossing the joint portion was generated in the test substrates a and b.

△: No crack completely crossing the joint portion was generated in the test substrate a.

×: Cracks completely crossing the joint portion were generated in all of the test substrates a to c.

(5) Liftoff occurrence confirmation test

The following tools were prepared.

• Connector component (product name: S15B-EH(LF)(SN), manufactured by J.S.T.MFG.CO.,LTD.)
• Glass epoxy substrate (substrate: FR-4, surface treatment: Cu-OSP, size: 50 mm×50 mm, thickness: 1.6 mm, having 1.6 land in diameter and through-hole with a diameter of 1.0 mm at 2.5 mm pitch intervals)
• 200 $\mu$m thick metal mask having an opening pattern with a diameter of 3 mm at 5 mm pitch intervals

Then, each test substrate was prepared by the following procedure using the tool and each solder paste, and a liftoff occurrence confirmation test was performed.

First, a solder paste was printed on a glass epoxy substrate using a metal mask. Then, terminals of the connector component were respectively inserted into predetermined through-holes provided in the glass epoxy substrate, and reflowed using a reflow furnace (product name: TNP-538EM, manufactured by TAMURA CORPORATION) to prepare a test substrate having a solder joint portion (fillet) joining the connector component and the glass epoxy substrate. The reflow was performed under the same conditions as in (2) drop impact test.

Next, a target part of each test substrate was cut out and sealed using an epoxy resin (product name: EPOMOUNT (main agent and curing agent), manufactured by Refinetec Corporation). Furthermore, the center cross section of the terminal of each connector component mounted on each test substrate was made visible using a wet polishing machine (product name: TegraPol-25, manufactured by Marumoto Struers Co., Ltd.), observed using a scanning electron microscope (product name: TM-1000, manufactured by Hitachi High-Technologies Corporation), and evaluation was made according to the following criteria. The number of evaluation terminals was eight. The results are shown in Tables 4 to 6.

O: No Liftoff occurred
×: Liftoff occurred

(5) Needle-shaped substance generation confirmation test

A solder ingot consists of each solder alloy was prepared. Then, for each solder ingot, a solder alloy powder was prepared on the basis of the following conditions.

First, 50 g of a solder ingot, 890 g of castor oil, and 10 g of hydrogenated acid-modified rosin (product name: KE-604, manufactured by Arakawa Chemical Industries, Ltd.) were put in a 2 L stainless steel beaker. Then, this was continuously heated using a mantle heater.

When the temperature of the stored content in the stainless steel beaker reached 100°C, stirring of the stored content in the stainless steel beaker was started using a homogenizer (manufactured by SMT CORPORATION) with the rotation speed set at 2,000rpm. The heating by the mantle heater was continued during the stirring.

When the temperature of the stored content in the stainless steel beaker reached 200°C, the heating was stopped, the rotation of the homogenizer was changed to 10,000rpm, and then the stored content in the stainless steel beaker were stirred for 5 minutes. After completion of the stirring, the stored content in the stainless steel beaker were cooled until the temperature reached room temperature.

Then, the solder alloy powder precipitated in castor oil was taken out from the stainless steel beaker, washed with ethyl acetate to remove attached substances, and then the state of the solder alloy powder was observed using a digital microscope at 200x magnification. The observation results were evaluated based on the following criteria. The results are shown in Tables 4 to 6.

○: No needle-shaped substance is generated in solder alloy powder.
×: A needle-shaped substance was generated in the solder alloy powder.

[Table 4]

| | (1) Tensile test | (2) Drop Impact Test | (3) Heat cycle test | (4) Liftoff occurrence confirmation test | (5) Needle-shaped substance generation confirmation test |
|---|---|---|---|---|---|
| Example 1 | ○ | ○ | ○ | ○ | ○ |
| Example 2 | ⊙ | ⊙ | ⊙ | ○ | ○ |
| Example 3 | ⊙ | ⊙ | ⊙ | ○ | ○ |
| Example 4 | ⊙ | ⊙ | ⊙ | ○ | ○ |
| Example 5 | ⊙ | ⊙ | ⊙ | ○ | ○ |
| Example 6 | ⊙ | ⊙ | ⊙ | ○ | ○ |
| Example 7 | ⊙ | ⊙ | ⊙ | ○ | ○ |
| Example 8 | ○ | ○ | ○ | ○ | ○ |
| Example 9 | △ | △ | △ | ○ | ○ |
| Example 10 | △ | △ | ○ | ○ | ○ |
| Example 11 | ○ | ○ | ○ | ○ | ○ |
| Example 12 | ⊙ | ⊙ | ⊙ | ○ | ○ |
| Example 13 | ○ | ○ | ⊙ | ○ | ○ |
| Example 14 | △ | △ | ○ | ○ | ○ |
| Example 15 | ○ | ○ | ○ | ○ | ○ |
| Example 16 | ⊙ | ⊙ | ⊙ | ○ | ○ |
| Example 17 | ⊙ | ⊙ | ⊙ | ○ | ○ |
| Example 18 | ○ | ○ | ⊙ | ○ | ○ |
| Example 19 | ○ | ○ | ⊙ | ○ | ○ |
| Example 20 | ○ | ○ | ⊙ | ○ | ○ |
| Example 21 | ○ | ○ | ⊙ | ○ | ○ |
| Example 22 | △ | △ | ⊙ | ○ | ○ |
| Example 23 | △ | △ | △ | ○ | ○ |
| Example 24 | △ | △ | ⊙ | ○ | ○ |
| Example 25 | ⊙ | ⊙ | ⊙ | ○ | ○ |

[Table 5]

| | (1) Tensile test | (2) Drop Impact Test | (3) Heat cycle test | (4) Liftoff occurrence confirmation test | (5) Needle-shaped substance generation confirmation test |
|---|---|---|---|---|---|
| Example 26 | ⊙ | ⊙ | ⊙ | ○ | ○ |
| Example 27 | ⊙ | ⊙ | ⊙ | ○ | ○ |
| Example 28 | ⊙ | ⊙ | ⊙ | ○ | ○ |
| Example 29 | ⊙ | ⊙ | ⊙ | ○ | ○ |
| Example 30 | ⊙ | ⊙ | ⊙ | ○ | ○ |
| Example 31 | ⊙ | ⊙ | ⊙ | ○ | ○ |
| Example 32 | ⊙ | ⊙ | ⊙ | ○ | ○ |
| Example 33 | ⊙ | ⊙ | ⊙ | ○ | ○ |
| Example 34 | ⊙ | ⊙ | ⊙ | ○ | ○ |
| Example 35 | ⊙ | ⊙ | ⊙ | ○ | ○ |
| Example 36 | ⊙ | ⊙ | ⊙ | ○ | ○ |
| Example 37 | ⊙ | ⊙ | ⊙ | ○ | ○ |

[Table 6]

| | (1) Tensile test | (2) Drop Impact Test | (3) Heat cycle test | (4) Liftoff occurrence confirmation test | (5) Needle-shaped substance generation confirmation test |
|---|---|---|---|---|---|
| Comparative Example 1 | × | × | × | ○ | ○ |
| Comparative Example 2 | ○ | ○ | ○ | × | ○ |
| Comparative Example 3 | ○ | ○ | ○ | × | ○ |
| Comparative Example 4 | × | × | × | ○ | ○ |
| Comparative Example 5 | × | × | × | ○ | ○ |
| Comparative Example 6 | × | × | △ | ○ | ○ |
| Comparative Example 7 | × | × | ⊙ | ○ | ○ |
| Comparative Example 8 | △ | △ | × | ○ | ○ |
| Comparative Example 9 | × | × | ⊙ | ○ | ○ |
| Comparative Example 10 | △ | △ | × | ○ | ○ |
| Comparative Example 11 | △ | △ | × | ○ | ○ |
| Comparative Example 12 | △ | △ | × | ○ | ○ |
| Comparative Example 13 | △ | △ | × | ○ | ○ |
| Comparative Example 14 | △ | △ | × | ○ | ○ |
| Comparative Example 15 | △ | △ | × | ○ | ○ |
| Comparative Example 16 | △ | △ | × | ○ | ○ |
| Comparative Example 17 | △ | △ | × | ○ | ○ |
| Comparative Example 18 | ⊙ | ⊙ | △ | ○ | × |
| Comparative Example 19 | △ | △ | × | ○ | ○ |
| Comparative Example 20 | △ | △ | × | ○ | ○ |

(continued)

|  | (1) Tensile test | (2) Drop Impact Test | (3) Heat cycle test | (4) Liftoff occurrence confirmation test | (5) Needle-shaped substance generation confirmation test |
|---|---|---|---|---|---|
| Comparative Example 21 | × | × | △ | ○ | ○ |
| Comparative Example 22 | △ | △ | × | ○ | ○ |

As described above, since the solder alloy of the present example comprises Bi, Sb, Ag, and Sn in predetermined amounts, it is possible to form a joint portion showing good results in any of the above (1) to (4) while comprising Bi. In addition, the solder alloy of this example can suppress the generation of the needle-shaped substance even when Fe is added.

The strain rate when the automobile collides with the object is said to be $10^{-3}$ ($s^{-1}$) to $10^3$ ($s^{-1}$). In the tensile test (1), since the test piece having a GL0 of 12 mm is pulled with a stroke of 0.72 mm/min, the strain rate of the test piece is calculated to be $10^{-3}$ ($s^{-1}$).

As described above, it can be seen that the solder alloy of the present examples can form a joint portion having good resistance, that is, good strength and ductility even when a load comparable to the strain rate when an automobile collides with an object is applied.

As described above, the solder alloy of the present examples can form a joint portion that comprises Bi, has heat cycle resistance and drop impact resistance, and can suppress the occurrence of liftoff. In addition, the electronic control device and the electronic device having such a joint portion can exhibit high reliability.

Reference Signs List

10    Test piece

Claims

1.    A solder alloy comprising:

   35 mass% or more and 65 mass% or less of Bi;
   0.1 mass% or more and 0.65 mass% or less of Sb;
   0.05 mass% or more and 2 mass% or less of Ag, and
   the balance consisting of Sn and inevitable impurities.

2.    The solder alloy according to claim 1, further comprising:
   one or more selected from the group consisting of P, Ga, and Ge in a total amount of 0.001 mass% or more and 0.05 mass% or less.

3.    The solder alloy according to claim 1 or 2, further comprising:
   one or more selected from the group consisting of Mn, Ti, Al, Cr, V, Fe, Mg, Pd, Pb, and Mo in a total amount of 0.001 mass% or more and 0.05 mass% or less.

4.    A joining material comprising:
   the solder alloy according to any one of claims 1 to 3.

5.    A solder paste comprising:

   a powder made of the solder alloy according to any one of claims 1 to 3; and
   a flux comprising;
   a base resin,
   a thixotropic agent,
   an activator, and a solvent.

**6.** A joint portion formed of the solder alloy according to any one of claims 1 to 3.

**7.** Ajoint portion formed of the joining material according to claim 4.

**8.** A joint portion formed of the solder paste according to claim 5.

**9.** A joined structure comprising:

a first joining target material;
a joint portion;
a second joining target material,

wherein the joint portion is the joint portion according to any one of claims 6 to 8, and
the first joining target material and the second joining target material are joined via the joint portion.

**10.** An electronic control device comprising the joined structure according to claim 9.

FIG.1

## INTERNATIONAL SEARCH REPORT

| International application No. |
|---|
| **PCT/JP2023/002160** |

| A. | CLASSIFICATION OF SUBJECT MATTER |
|---|---|

*C22C 12/00*(2006.01)i; *C22C 13/02*(2006.01)i; *B23K 35/26*(2006.01)i; *B23K 35/363*(2006.01)i
FI:   B23K35/26 310A; C22C13/02; C22C12/00; B23K35/363 E

According to International Patent Classification (IPC) or to both national classification and IPC

| B. | FIELDS SEARCHED |
|---|---|

Minimum documentation searched (classification system followed by classification symbols)

C22C12/00; C22C13/02; B23K35/26; B23K35/363

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2001-334386 A (HITACHI, LTD.) 04 December 2001 (2001-12-04) | 1, 2, 4-10 |
|   | claims, paragraphs [0008]-[0010] | |
| A |   | 3 |
| A | JP 2017-51984 A (KOKI:KK) 16 March 2017 (2017-03-16) | 1-10 |
|   | example 7 | |
| A | CN 102029479 A (GUANGZHOU RESEARCH INSTITUTE OF NONFERROUS METALS) 27 April 2011 (2011-04-27) | 1-10 |
|   | example 3 | |
| A | WO 2019/171978 A1 (SENJU METAL INDUSTRY CO., LTD.) 12 September 2019 (2019-09-12) | 1-10 |
|   | claims, examples | |
| A | WO 2020/209384 A1 (NIHON SUPERIOR CO., LTD.) 15 October 2020 (2020-10-15) | 1-10 |
|   | examples | |

☐ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 February 2023** | **07 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/002160**

| Patent document cited in search report | | | Publication date (day/month/year) | Patent family member(s) | | | Publication date (day/month/year) |
|---|---|---|---|---|---|---|---|
| JP | 2001-334386 | A | 04 December 2001 | (Family: none) | | | |
| JP | 2017-51984 | A | 16 March 2017 | (Family: none) | | | |
| CN | 102029479 | A | 27 April 2011 | (Family: none) | | | |
| WO | 2019/171978 | A1 | 12 September 2019 | US | 2020/0376608 | A1 | |
| | | | | claims, examples | | | |
| | | | | EP | 3666453 | A1 | |
| | | | | KR | 10-2020-0036948 | A | |
| | | | | CN | 111182999 | A | |
| | | | | BR | 112020005521 | A2 | |
| | | | | TW | 201940275 | A | |
| WO | 2020/209384 | A1 | 15 October 2020 | US | 2022/0016733 | A1 | |
| | | | | examples | | | |
| | | | | EP | 3828294 | A1 | |
| | | | | CN | 112513300 | A | |
| | | | | KR | 10-2021-0149831 | A | |
| | | | | CA | 3136585 | A1 | |
| | | | | IL | 287143 | A | |
| | | | | BR | 112021020323 | A2 | |
| | | | | TW | 202045291 | A | |
| | | | | CN | 113897511 | A | |

Form PCT/ISA/210 (patent family annex) (January 2015)

**EP 4 656 751 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6477965 B
- JP 6804126 B
- JP 6951438 B